# EUROPÄISCHE PATENTANMELDUNG

(11) **EP 2 073 358 A2**
(43) Veröffentlichungstag der Anmeldung: **24.06.2009**
(21) Anmeldenummer: 08105625.1
(22) Anmeldetag: 21.10.2008
(51) Int. Cl.: H02K 7/116, H02K 1/30

(54) **Kompakter Stellantrieb**

(30) Priorität: 18.12.2007 DE 102007060950
(71) Anmelder: Robert Bosch GmbH, 70442 Stuttgart (DE)
(72) Erfinder: Babajanyan, Artem, 76532 Baden-Baden (DE); Reutlinger, Kurt, 70174 Stuttgart (DE)

(57) **Zusammenfassung**

Die vorliegende Erfindung betrifft einen Stellantrieb, umfassend eine elektrische Maschine mit einem Stator (2) und einem Rotor (3) sowie ein Getriebe zum Untersetzen einer Drehzahl des Rotors. Der Rotor (3) ist als Hohlwelle mit einer Innenverzahnung (3a) ausgebildet, das Getriebe ist ein Planetengetriebe (5) mit einem Hohlrad, mehreren Planetenrädern (6) und wenigstens einem Sonnenrad (7;11,12), wobei die Innenverzahnung (3a) des Rotors (3) mit dem als Hohlwelle ausgebildeten Rotor das Hohlrad bildet und ein Antrieb des Planetengetriebes über das Hohlrad erfolgt.

## Beschreibung

### Stand der Technik

Die vorliegende Erfindung betrifft einen kompakten Stellantrieb gemäß dem Oberbegriff des Anspruches 1.

Stellantriebe sind aus dem Stand der Technik in unterschiedlichen Ausgestaltungen bekannt. Stellantriebe werden beispielsweise in Fahrzeugen als Wischermotoren, Sitzverstellmotoren oder Fensterhebermotoren verwendet. Aufgrund der häufig beengten Platzverhältnisse ist es wünschenswert, dass derartige Stellantriebe möglichst kleinbauend ausgelegt sind. Problematisch hierbei ist, dass aufgrund der hohen Drehzahlen der Elektromotoren für die Anwendungsfälle jeweils noch ein Untersetzungsgetriebe eingebaut werden muss. Hierbei vergrößern sich jedoch die Abmessungen der Motor-Getriebe-Einheiten.

Aus der DE 102 43 809 A1 ist ein Stellantrieb zur Verwendung in einem Fahrzeug bekannt, welcher ein Planetengetriebe aufweist. Ein Elektromotor treibt dabei ein Planetenradträger des Planetengetriebes an. Hierdurch ergibt sich jedoch ein sehr aufwendiger und teurer Aufbau des Planetengetriebes.

### Vorteile der Erfindung

Der erfindungsgemäße Stellantrieb mit den Merkmalen des Patentanspruchs 1 weist demgegenüber den Vorteil auf, dass er einen minimalen Bauraum aufnimmt und dabei trotzdem sehr einfach und kostengünstig aufgebaut ist. Ferner kann erfindungsgemäß auch ein mehrstufiges Untersetzungsgetriebe bereitgestellt werden, so dass der erfindungsgemäße Stellantrieb insbesondere auch in Fahrzeugen als kleiner Stellantrieb verwendet werden kann. Dies wird erfindungsgemäß dadurch erreicht, dass der Stellantrieb einen als Hohlwelle mit einer Innenverzahnung ausgebildeten Rotor als Eingangselement eines Planetengetriebes umfasst. Im Inneren des hohlen Rotors ist dann das Planetengetriebe mit mehreren Planeten und einem Planetenradträger sowie wenigstens einem Sonnenrad angeordnet. Die Innenverzahnung des Rotors bildet das Hohlrad des Planetengetriebes. Somit ist der Rotor integraler Bestandteil des Planetengetriebes. Dadurch kann ein sehr kompakter Aufbau für den Stellantrieb realisiert werden.

Die Unteransprüche zeigen bevorzugte Weiterbildungen der Erfindung.

Bevorzugt sind am Umfang des Rotors ferner eine Vielzahl von Permanentmagneten angeordnet. Hierdurch kann die elektrische Maschine als EC-Motor ausgebildet sein. Ohne Permanentmagnete kann ein SR-Motor bzw. eine geschaltete Reluktanzmaschine bereitgestellt werden.

Vorzugsweise ist genau ein Sonnenrad vorgesehen, welches ortsfest angeordnet ist. Ein Abtrieb des Planetengetriebes erfolgt dabei über einen Planetenradträger. Hierdurch übernimmt das Sonnenrad, welches beispielsweise an einem Gehäuse ortsfest fixiert ist, zusätzlich noch eine Lagerfunktion für das Planetengetriebe. Hierbei sind für den Rotor und die Planeten- bzw. den Planetenradträger keine separaten Lagerbauteile vorzusehen.

Gemäß einer alternativen Ausgestaltung der vorliegenden Erfindung umfasst das Planetengetriebe ein erstes Sonnenrad und ein zweites Sonnenrad. Beide Sonnenräder kämmen dabei mit den Planetenrädern, wobei das erste Sonnenrad ortsfest angeordnet ist und das zweite Sonnenrad drehbar angeordnet ist. Ein Abtrieb des Planetengetriebes erfolgt über das zweite, drehbare Sonnenrad. Dieser Aufbau ermöglicht es, dass ein kompakter und einfacher Abtrieb über beispielsweise eine am zweiten Sonnenrad fixierte Abtriebswelle erfolgen kann. Eine Lagerung des zweiten Sonnenrads sowie auch des Rotors, kann dabei über die Planetenräder und das ortsfeste erste Sonnenrad erfolgen. Dadurch kann der Stellantrieb einen besonders einfachen und kompakten Aufbau bereitstellen.

Vorzugsweise ist eine Zähnezahl des ortsfesten ersten Sonnenrads größer als eine Zähnezahl des zweiten drehbaren Sonnenrads. Besonders bevorzugt ist dabei die Zähnezahl des zweiten drehbaren Sonnenrads gleich einer Zähnezahl des ersten ortsfesten Sonnenrads abzüglich oder zuzüglich der Anzahl der vorhandenen Planetenräder. D.h., wenn z.B. das erste Sonnenrad eine Zähnezahl von 30 aufweist und drei Planetenräder vorhanden sind, weist das zweite Sonnenrad einen Zähnezahl von 27 auf. Alternativ weist das zweite Sonnenrad eine Zähnezahl auf, welche gleich einer Zähnezahl des ersten Sonnenrads abzüglich oder zuzüglich eines Vielfachen der Anzahl der vorhandenen Planetenräder ist. Hierdurch wird gewährleistet, dass die Planeten immer in Kontakt mit dem ersten und zweiten Sonnenrad sind. Selbstverständlich lassen sich die beiden Sonnenräder auch mit umgekehrten Zahnzahlen realisieren, z.B. stehendes Sonnenrad 27 Zähne und drehendes Sonnenrad 30 Zähne.

Um eine besonders einfache und kostengünstige Herstellbarkeit des Stellantriebs zu gewährleisten, ist der Rotor vorzugsweise aus einem Blechpaket hergestellt. Besonders bevorzugt wird der Rotor dabei mittels Stanzen hergestellt und eine Innenverzahnung des Rotors wird gleichzeitig mit dem Stanzvorgang in mehreren oder allen Blechen vorgenommen. Die einzelnen Bleche können beispielsweise mittels Kleben oder mittels Nieten oder über formschlüssige Verbindungen zwischen den einzelnen Blechen miteinander verbunden werden.

Eine Anzahl der Planetenräder des erfindungsgemäßen Planetengetriebes ist vorzugsweise 3 oder 4. Hierdurch kann einerseits eine ausreichende Untersetzung sichergestellt werden und andererseits wird die Teilezahl des Planetengetriebes nicht zu groß.

Als Permanentmagneten, welche im Rotor angeordnet sind, werden vorzugsweise Magneten aus einem Selten-Erden-Material verwendet. Hierbei werden insbesondere Permanentmagneten aus NdFeB verwendet, wodurch eine Remanenzinduktion, z.B. gegenüber Ferrit, signifikant um ca. den Faktor 3 vergrößert werden kann.

Der Stellantrieb wird vorzugsweise in Fahrzeugen als Wischerantrieb oder als Fensterheberantrieb oder als Sitzverstellantrieb oder Schiebedachverstellantrieb verwendet.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines Stellantriebs gemäß einem ersten Ausführungsbeispiel der Erfindung,
- Figur 2: eine schematische Schnittansicht eines Stellantriebs gemäß einem zweiten Ausführungsbeispiel der Erfindung, und
- Figur 3: eine Schnittansicht entlang der Linie III-III von Figur 2.

### Bevorzugte Ausführungsformen der Erfindung

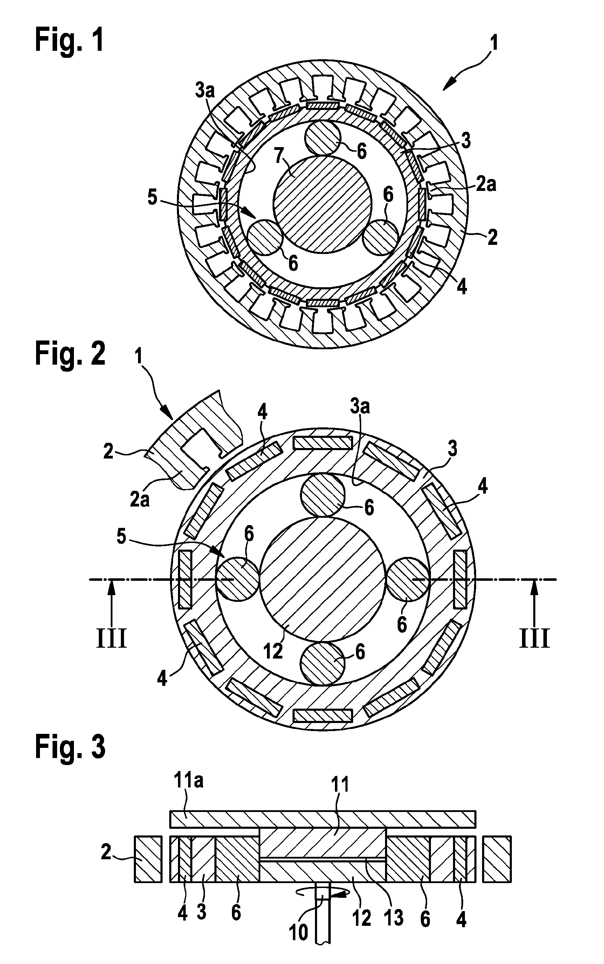

Nachfolgend wird unter Bezugnahme auf Figur 1 ein Stellantrieb 1 gemäß einem ersten bevorzugten Ausführungsbeispiel der Erfindung im Detail beschrieben.

Wie aus Figur 1 ersichtlich ist, umfasst der Stellantrieb 1 einen Stator 2 mit einer Vielzahl von Polen 2a, an denen jeweils eine Wicklung (nicht gezeigt) vorgesehen ist. Im Inneren des Stators 2 ist ein Rotor 3 angeordnet, welcher als hohler Rotor ausgebildet ist. Im Inneren des hohlen Rotors ist eine Innenverzahnung 3a vorgesehen. Am äußeren Umfang des Rotors 3 sind entlang des Umfangs eine Vielzahl von Permanentmagneten 4 angeordnet. In diesem Ausführungsbeispiel sind die Permanentmagnete 4 mittels Kleben am Rotor 3 fixiert. Die Permanentmagnete sind aus einem Selten-Erden-Material hergestellt.

Im Inneren des hohlen Rotors ist ein Planetengetriebe 5 angeordnet. Die Innenverzahnung 3a des Rotors 3 bildet dabei das Hohlrad des Planetengetriebes 5. Ferner umfasst das Planetengetriebe 5 drei Planetenräder 6 sowie ein Sonnenrad 7. Das Sonnenrad 7 ist zentrisch im Rotor 3 angeordnet und an einem Gehäuse des Stellantriebs ortsfest angeordnet. Durch diesen Aufbau kann insbesondere auf eine gesonderte Lagerung des Rotors 3 verzichtet werden. Der Rotor 3 ist in diesem Ausführungsbeispiel über die drei Planetenräder geführt und gelagert. Ein Abtrieb des Planetengetriebes ist über einen nicht dargestellten Planetenradträger vorgesehen. Durch den in Figur 1 gezeigten Aufbau kann dabei eine Getriebeuntersetzung in einem Verhältnis von 1 : 2 realisiert werden.

Somit bilden erfindungsgemäß ein Motor und ein Getriebe des Stellantriebs 1 eine kompakte Einheit, wobei das Planetengetriebe 5 direkt im Inneren des hohlen Rotors integriert ist. Der Rotor ist dabei ein Teil des Planetengetriebes. Dabei weist der Stellantrieb trotzdem einen sehr einfachen und kostengünstigen Aufbau auf. Der Motor kann insbesondere dort eingesetzt werden, wo kleine Geschwindigkeiten und hohe Momentanforderungen, wie beispielsweise bei Fensterhebern oder Schiebedachantrieben, verlangt werden.

Der Rotor 3 ist aus einem gestanzten Blechpaket gebildet, wobei das Blechpaket eine Vielzahl von gestanzten Einzelblechen umfasst. Beim Stanzen wird dabei die Innenverzahnung mit ausgestanzt, so dass der Rotor sehr kostengünstig hergestellt werden kann. Um einen erhöhten Verschleiß am Rotor zu vermeiden, wird nach dem Stanzvorgang insbesondere im Bereich der Innenverzahnung zusätzlich noch ein Entgratungsschritt ausgeführt, wodurch eine Lebensdauer des Rotors signifikant vergrößert werden kann. Die einzelnen Bleche sind dabei über formschlüssige Verbindungselemente zu dem Blechpaket zusammengefügt.

Nachfolgend wird unter Bezugnahme auf die Figuren 2 und 3 ein Stellantrieb 1 gemäß einem zweiten Ausführungsbeispiel der Erfindung im Detail beschrieben. In der Zeichnung sind gleiche bzw. funktional gleiche Teile mit den gleichen Bezugszeichen wie im ersten Ausführungsbeispiel bezeichnet.

In den Figuren 2 und 3 wird lediglich der Rotor mitsamt dem integrierten Planetengetriebe schematisch gezeigt. Ein Stator 2 ist, wie in dem in Figur 1 gezeigten Ausführungsbeispiel, aufgebaut.

Wie aus Figur 2 ersichtlich ist, sind im Unterschied zum ersten Ausführungsbeispiel beim zweiten Ausführungsbeispiel die Permanentmagnete 4 in den Rotor 3 integriert und etwas innerhalb des äußeren Umfangs des Rotors 3 angeordnet. Hierzu weist der aus einer Vielzahl von Blechen hergestellte Rotor gestanzte Ausnehmungen zur Aufnahme der Permanentmagnete 4 auf. Ferner weist das Planetengetriebe 5 vier Planetenräder 6 auf. Wie weiter aus Figur 3 ersichtlich ist, sind beim zweiten Ausführungsbeispiel ein erstes Sonnenrad 11 und ein zweites Sonnenrad 12 vorgesehen. Die beiden Sonnenräder 11 und 12 sind dabei auf einer Achse hintereinander angeordnet, wobei jedoch das erste Sonnenrad 11 über eine Befestigungsscheibe 11a mit einem Gehäuse des Stellantriebs (nicht gezeigt) verbunden ist. Das zweite Sonnenrad 12 ist mit einer Abtriebswelle 10 verbunden. Somit ist das erste Sonnenrad 11 ortsfest angeordnet und das zweite Sonnenrad 12 ist drehbar angeordnet. In Axialrichtung ist ein Spalt 13 zwischen dem ersten und zweiten Sonnenrad 11, 12 vorhanden.

Eine Zähnezahl der Sonnenräder ist derart gewählt, dass das zweite, drehbare Sonnenrad 12 eine Zähnezahl aufweist, welche gleich der Zähnezahl des ersten, ortsfesten Sonnenrads 11 abzüglich der Anzahl der Planeten 6 ist. D.h., wenn das erste Sonnenrad 11 eine Zähnezahl von 84 aufweist und vier Planetenräder 6 vorgesehen sind, weist das drehbare zweite Sonnenrad 12 eine Zähnezahl von 80 auf.

Da das erste Sonnenrad 11 ortsfest ist, kann ferner der Rotor 3 über die Planetenräder 6 gelagert werden. Ferner können die vier Planetenräder 6 auch das drehbare Sonnenrad 12 lagern. Da das ortsfeste erste Sonnenrad 11 die Planeten 6 lagert, ist es nicht zwingend notwendig, einen Planetenradträger vorzusehen, sondern die Planetenräder 6 können frei zwischen der Innenverzahnung 3 a und den Sonnenrädern 11, 12 angeordnet sein.

Da der Eingang des Planetengetriebes der hohle Rotor 3 ist, wird eine zweistufige Untersetzung bereitgestellt, wobei insbesondere eine Gesamtübersetzung von bis zu 1 : 27 erreicht werden kann. Ferner lassen sich, je nach Abmessungen und Zahnzahlen der Betriebsräder, auch Übersetzungen größer als 27 und kleiner als 27 realisieren.

Ferner wird über das erste, ortsfeste Sonnenrad 11 während des Betriebes eine Abstützung eines Differenzmoments gegenüber dem Gehäuse übernommen.

Ansonsten entspricht dieses Ausführungsbeispiel dem vorhergehenden Ausführungsbeispiel, so dass auf die dort gegebene Beschreibung verwiesen werden kann.

Erfindungsgemäß kann somit ein Stellantrieb bereitgestellt werden, bei dem ein Planetengetriebe in eine hohle Rotorwelle eines elektrischen Antriebes integriert ist. Hierdurch ergibt sich ein kompakter und einfacher Aufbau, da insbesondere ein Eingang in das Planetengetriebe über den hohlen Rotor 3 realisiert ist, welcher als Hohlrad des Planetengetriebes fungiert.

Bei höheren Anforderungen an Lebensdauer und Momente kann die Innenverzahnung des Rotors auch aus einem anderen Werkstoff als dem Blechpaket eingesetzt werden. Zudem ist es auch möglich, die rotierenden Teile des Antriebes, wie z.B. den Rotor und die Zahnräder, separat zu lagern.

## Patentansprüche

1. Stellantrieb, umfassend eine elektrische Maschine mit einem Stator (2) und einem Rotor (3) sowie ein Getriebe zum Untersetzen einer Drehzahl des Rotors, **dadurch gekennzeichnet, dass**
- der Rotor (3) als Hohlwelle mit einer Innenverzahnung (3a) ausgebildet ist, und
- das Getriebe ein Planetengetriebe (5) mit einem Hohlrad, mehreren Planetenrädern (6) und wenigstens einem Sonnenrad (7; 11, 12) ist, wobei die Innenverzahnung (3a) des Rotors (3) mit dem als Hohlwelle ausgebildeten Rotor das Hohlrad bildet und ein Antrieb des Planetengetriebes über das Hohlrad erfolgt.

2. Stellantrieb nach Anspruch 1, **dadurch gekennzeichnet, dass** am Rotor (3) entlang eines Umfangs des Rotors eine Vielzahl von Magnetelementen (4) angeordnet ist.

3. Stellantrieb nach Anspruch 1 oder 2, **dadurch gekennzeichnet, dass** das Sonnenrad (7) ortsfest angeordnet ist und ein Abtrieb des Planetengetriebes (5) über einen Planetenradträger erfolgt, welcher mit den Planetenrädern verbunden ist.

4. Stellantrieb nach Anspruch 1 oder 2, **dadurch gekennzeichnet, dass** das Planetengetriebe (5) ein erstes Sonnenrad (11) und ein zweites Sonnenrad (12) umfasst, welche beide mit den Planetenrädern (6) kämmen, wobei das erste Sonnenrad (11) ortsfest angeordnet ist und das zweite Sonnenrad (12) drehbar ist und ein Abtrieb des Planetengetriebes über das drehbare zweite Sonnenrad (12) erfolgt.

5. Stellantrieb nach Anspruch 4, **dadurch gekennzeichnet, dass** eine Zähnezahl des ortsfesten Sonnenrads (11) größer oder kleiner ist als eine Zähnezahl des drehbaren zweiten Sonnenrads (12).

6. Stellantrieb nach Anspruch 5, **dadurch gekennzeichnet, dass** die Zähnezahl des drehbaren zweiten Sonnenrads (12) gleich einer Zähnezahl des ortsfesten ersten Sonnenrads (11) abzüglich oder zuzüglich der Anzahl der vorhandenen Planetenräder (6) ist, oder gleich einer Zähnezahl des ortsfesten ersten Sonnenrads (11) abzüglich oder zuzüglich eines Vielfachen der Anzahl der vorhandenen Planetenräder (6) ist.

7. Stellantrieb nach einem der vorhergehenden Ansprüche, **dadurch gekennzeichnet, dass** der Rotor (3) eine Vielzahl von Blechen umfasst, welche zusammen ein Blechpaket bilden.

8. Stellantrieb nach Anspruch 7, **dadurch gekennzeichnet, dass** eine Innenverzahnung (3a) des Rotors integral an mehreren oder allen Blechen des Blechpaketes ausgebildet ist.

9. Stellantrieb nach einem der vorhergehenden Ansprüche, **dadurch gekennzeichnet, dass** das Planetengetriebe (5) drei Planeten oder vier Planeten umfasst.

10. Stellantrieb nach einem der Ansprüche 2 bis 9, **dadurch gekennzeichnet, dass** das Magnetelement aus einem Selten-Erden-Material, insbesondere aus NdFeB, hergestellt ist.
